# EUROPEAN PATENT APPLICATION

(11) **EP 4 817 691 A2**
(43) Date of publication of application: **07.10.2026**
(21) Application number: 26200914.5
(22) Date of filing: 21.02.2024
(51) Int. Cl.: A63B 21/00

(54) **OUTPUT DEVICE AND OUTPUT ASSEMBLY**

(30) Priority: 21.02.2023 CN 202310172558; 21.02.2023 CN 202310180437; 21.02.2023 CN 202310203074; 21.02.2023 CN 202310186423; 21.02.2023 CN 202320356894 U; 21.02.2023 CN 202320346128 U; 21.02.2023 CN 202320391256 U; 21.02.2023 CN 202320364243 U; 17.07.2023 CN 202321879489 U; 28.09.2023 CN 202322680388 U
(62) Document number(s) of the earlier application(s) in accordance with Art. 76 EPC: 24759711.5 / 4 672 567
(71) Applicant: Beyond Power Inc., Shenzhen, Guangdong 518114 (CN)
(72) Inventor: ZHOU, Changxing, Shenzhen, 518114 (CN); HUANG, Sirong, Shenzhen, 518114 (CN); CHEN, Juncheng, Shenzhen, 518114 (CN); PAN, Hongtao, Shenzhen, 518114 (CN); YIN, Hang, Shenzhen, 518114 (CN); HE, Jiale, Shenzhen, 518114 (CN); YI, Jiahao, Shenzhen, 518114 (CN); MAI, Jiehong, Shenzhen, 518114 (CN); ZUO, Qianbin, Shenzhen, 518114 (CN)
(74) Representative: De Arpe Tejero, Manuel

(57) **Abstract**

A connecting busbar (520) and a motor (500). The connecting busbar (520) is configured in the motor (500) including multiple coils arranged in a peripheral direction. The connecting busbar (520) includes: a mounting base (521), being an insulating member; at least one first connecting member (522), inserted into the mounting base (521) and including at least two first connecting ends (5221), where a corresponding one of the at least two first connecting ends (5221) is configured to be connected to a corresponding one of the multiple coils (550); and at least one second connecting member (523), disposed on the mounting base (521) and including at least two second connecting ends (5231), where a corresponding one of the at least two second connecting ends (5231) is configured to be connected to another corresponding one of the multiple coils (550).

## Description

### TECHNICAL FIELD

The present disclosure relates to the technical field of output devices, and in particular, to a connecting busbar and a motor.

### BACKGROUND

Cable-type output devices are a widely used category of output devices. This type of device usually applies resistance or power to a cable. During use, a user exercises by reciprocally pulling the cable or being driven by the cable. The cable-type output device uses a reel as a storage device for the cable. A cable head of the cable is generally fixed to an end portion of a side of the reel, and then the cable can be wound around an axial direction of the reel, which facilitates retraction and release of the cable.

### SUMMARY OF THE INVENTION

The present disclosure provides a connecting busbar and a motor.

According to a first aspect of the present disclosure, the output device according to an embodiment of the present disclosure may be configured in a motor, and the motor may include a plurality of coils arranged in a peripheral direction. The connecting busbar may include: a mounting base, where the mounting base may be an insulating member; at least one first connecting member, inserted into the mounting base, where the first connecting member may include at least two first connecting ends, and a corresponding one of the at least two first connecting ends may be configured to be connected to a corresponding one of the plurality of coils; and at least one second connecting member, disposed on the mounting base, and including at least two second connecting ends, where a corresponding one of the at least two second connecting ends may be configured to be connected to another corresponding one of the plurality of coils.

In some embodiments, the first connecting member may include two first connecting ends disposed at intervals along the peripheral direction, the first connecting member may be disposed at least one of an inner side of the mounting base or an outer side of the mounting base, and the first connecting member may be connected to two adjacent coils of the plurality of coils via the two first connecting ends. The second connecting member may include two second connecting ends disposed at intervals along the peripheral direction, the second connecting member may further include a second connecting portion connected to the two second connecting ends, the second connecting portion extends along a top surface of the mounting base, and the second connecting member may be connected to two spaced-apart coils of the plurality of coils via the two second connecting ends.

In some embodiments, the first connecting member may be assembled to the mounting base in an inserting manner.

In some embodiments, at least one insertion slot may be defined on the mounting base, the first connecting member may further include an insertion portion, and the insertion portion may be configured to be inserted into the at least one insertion slot. The two first connecting ends may be exposed at an inner side or an outer side of the mounting base.

In some embodiments, a protruding portion may be disposed on at least one of the inner side or the outer side the mounting base, and the at least one insertion slot may be defined on the protruding portion, and the at least one insertion slot may be vertically defined downward from an upper end of the protruding portion.

In some embodiments, the insertion portion may be connected to the two first connecting ends, and the two first connecting ends may be located on both sides of the insertion portion. Alternatively, the first connecting member may include a first connecting portion and two insertion portions, the two first connecting ends may be connected to each other by the first connecting portion, the two insertion portions may be located on both sides of the two first connecting ends, and a corresponding one of the two insertion portions and a corresponding one of the two first connecting ends may be arranged at an angle. The angle between the corresponding one of the two insertion portions and the corresponding one of the two first connecting ends may be less than 90 degrees.

In some embodiments, each of the plurality of coils may include two terminals, one of the two terminals may be disposed at the inner side of the mounting base, and the other of the two terminals may be disposed at the outer side of the mounting base. There may be a plurality of first connecting members, and the plurality of first connecting members may include two groups of first connecting members, one group of the first connecting members may be disposed at the inner side of the mounting base, the other group of the first connecting members may be disposed at the outer side of the mounting base, and a corresponding one of the plurality of first connecting members disposed at the inner side and a corresponding one of the plurality of first connecting members disposed at the outer side may be arranged in a staggered manner along the peripheral direction.

In some embodiments, the second connecting member may be arranged inside the mounting base by prefabrication or subsequent assembly, and the two second connecting ends extend out of the mounting base.

In some embodiments, an annular groove may be defined on the mounting base, the second connecting member may be mounted in the annular groove, and the second connecting end extends out of the annular groove.

In some embodiments, the connecting busbar may further include a cover plate, and the cover plate may be configured to cover the annular groove. There may be a plurality of second connecting members, the plurality of second connecting members may be disposed in the annular groove, the connecting busbar may further include an insulating pad, and two adjacent second connecting members of the plurality of second connecting members may be isolated from each other by the insulating pad.

In some embodiments, the second connecting member and the mounting base may be pre-formed, the second connecting member may be embedded in the mounting base. The second connecting member may further include a positioning portion connected to the second connecting portion, and the positioning portion may extend out from the mounting base.

In some embodiments, at least one of the following may be fulfilled: a corresponding one of the plurality of coils may include a wound flat wire, a terminal of the corresponding one of the plurality of coils may be sheet-shaped, and a corresponding one of the two first connecting ends and a corresponding one of the two second connecting ends may be sheet-shaped, and the terminal of the corresponding one of the plurality of coils, the corresponding one of the two first connecting ends, and the corresponding one of the two second connecting ends may be stacked along a thickness direction. In some embodiments, the terminal of each of the plurality of coils, each of the two first connecting ends, and each of the two second connecting ends protrude from the top surface of the mounting base.

According to a second aspect of the present disclosure, the motor according to some embodiments of the present disclosure motor includes: a motor housing; a stator assembly, fixedly disposed in the motor housing; a rotor assembly, rotatably disposed in the motor housing; a plurality of coils, arranged in a peripheral direction; and the connecting busbar according to any one of the foregoing embodiments. The plurality of coils and the connecting busbar may be located on the stator assembly or on the rotor assembly.

In some embodiments, the motor may be configured in a cable output device. The stator assembly may include a stator core, a plurality of winding frames may be arranged inside the stator core along a peripheral direction of the stator core, and a corresponding one of the plurality of coils may include a flat wire wound around a corresponding one of the plurality of winding frames. The corresponding one of the plurality of coils may include the flat wire stacked along a thickness direction, and a stacking direction may extend toward a central axis of the stator core.

In some embodiments, at least one of the following may be satisfied: the motor may further include a heat dissipation fan, and at least one of the rotor assembly or the stator assembly may include an avoidance portion, and the avoidance portion may be configured to mount the heat dissipation fan. In some embodiments, the stator assembly may be sleeved on the rotor assembly, and a core of the rotor assembly may be annular, and the heat dissipation fan may be disposed inside an annular structure of the rotor assembly; or a gap may be defined between an end portion of the stator assembly and the motor housing, and the heat dissipation fan may be located in the gap.

In some embodiments, at least one of an angle sensor or a rotation number sensor may be disposed on a motor shaft, a reel shaft, or any transmission shaft and may be configured to record at least one of a rotation angle or the number of revolutions.

In some embodiments, the heat dissipation fan may be a passive fan, and the heat dissipation fan may be disposed in the avoidance portion of the rotor assembly; or the heat dissipation fan may be an active fan, the heat dissipation fan may be connected to the stator assembly or the motor housing, the heat dissipation fan may be located in the avoidance portion of at least one of the stator assembly or the rotor assembly, and the heat dissipation fan rotates independently relative to the rotor assembly.

In some embodiments, the active fan may be integrated with a driving apparatus and connected to a motor terminal board via a third FPC flexible cable. The third FPC flexible cable may be located on the outer side of the stator assembly. A metal protective plate may be provided on a side of the third FPC flexible cable facing the rotor assembly or the stator assembly.

In some embodiments, the motor further includes: a magnetic ring, disposed on a rotor shaft of the rotor assembly, and connected to the rotor shaft by bonding, or at least one of the following may be satisfied: the magnetic ring and the rotor shaft may be axially positioned via a magnetic ring snap, or the magnetic ring and the rotor shaft may be peripherally positioned via a spline.

In some embodiments, the magnetic ring may include a shell and a magnetic component embedded in the shell, and the magnetic ring snap and the spline may be both provided on the shell. The shell may be injection-molded outside the magnetic component, or the shell may be provided in a split manner and assembled outside the magnetic component. When the shell may be injection-molded outside the magnetic component, the magnetic component may be magnetized after injection molding and cooling.

In some embodiments, a motor key mounting position may be further arranged on the motor housing and configured to mount a second functional key, and the second functional key may be connected to a motor terminal board via the third FPC flexible cable.

Additional aspects and advantages of the present disclosure will be partly given in the following description, and partly will become apparent from the following description, or will be learned through the practice of the present disclosure.

### BRIEF DESCRIPTION OF THE DRAWINGS

The above and/or additional aspects and advantages of the present disclosure will become apparent and easily understood from the description of the embodiments in conjunction with the accompanying drawings.
FIG. 1 is a perspective structural view of an output device according to some embodiments of the present disclosure.
FIG. 2 is a perspective structural view of a cable housing according to some embodiments of the present disclosure.
FIG. 3 is a perspective structural view of a power supply assembly according to some embodiments of the present disclosure.
FIG. 4 is an exploded view of a partial structure of an output device according to some embodiments of the present disclosure.
FIG. 5 is a perspective structural view of an output device according to some embodiments of the present disclosure.
FIG. 6 is a partial enlarged view of portion A in FIG. 5.
FIG. 7 is a perspective structural view of an output device according to some embodiments of the present disclosure.
FIG. 8 is a partial enlarged view of portion B in FIG. 7.
FIG. 9 is a system block diagram of an output device according to some embodiments of the present disclosure.
FIG. 10 is a schematic diagram of a connection between a connecting structure and a base according to some embodiments of the present disclosure.
FIG. 11 is a schematic diagram of a connection between a connecting structure and a base according to some embodiments of the present disclosure.
FIG. 12 is a system block diagram of an output device according to some embodiments of the present disclosure.
FIG. 13 is a system block diagram of an output device according to some embodiments of the present disclosure.
FIG. 14 is a system block diagram of an output device according to some embodiments of the present disclosure.
FIG. 15 is a system block diagram of an output device according to some embodiments of the present disclosure.
FIG. 16 is a schematic diagram of combination scenarios of an output device in an embodiment.
FIG. 17 is a structural view of a heat dissipation cover according to an embodiment of the present disclosure.
FIG. 18 is a structural view of a locking apparatus according to an embodiment of the present disclosure.
FIG. 19 is a structural view of a connecting busbar according to some embodiments of the present disclosure.
FIG. 20 is a structural view of another connecting busbar according to some embodiments of the present disclosure.
FIG. 21 is a structural view of a first connecting member according to some embodiments of the present disclosure.
FIG. 22 is a structural view of another first connecting member according to some embodiments of the present disclosure.
FIG. 23 is a structural view of a second connecting member according to some embodiments of the present disclosure.
FIG. 24 is a structural view of a connection structure between a connecting member and a coil according to some embodiments of the present disclosure.
FIG. 25 is an exploded view of a motor according to some embodiments of the present disclosure.
FIG. 26 is a structural view of a stator core according to some embodiments of the present disclosure.
FIG. 27 is a structural view of a structure in which a magnetic ring is mounted on a rotor shaft according to some embodiments of the present disclosure.
FIG. 28 is a structural view of a magnetic ring according to some embodiments of the present disclosure.
FIG. 29 is a schematic diagram of a cross-sectional structure of a rear-assembled magnetic ring according to some embodiments of the present disclosure.
FIG. 30 is a structural view of a motor according to some embodiments of the present disclosure.

### DETAILED DESCRIPTION

Embodiments of the present disclosure are described in detail below, and examples of the embodiments are shown in accompanying drawings, and the same or similar reference numerals represent the same or similar elements or elements having the same or similar functions. The embodiments described below with reference to the accompanying drawings are illustrative and are intended to explain the present disclosure and should not be construed as limiting the present disclosure.

In the description of the present disclosure, it should be understood that terms such as "center", "longitudinal", "transverse/lateral", "length", "width", "thickness", "up", "down", "front", "back", "left", "right", "vertical", "horizontal", "top", "bottom", "inner", "outer", "clockwise", "counterclockwise", etc., indicate orientations or positional relationships based on orientations or positional relationships shown in the accompanying drawings. These terms are used only for the convenience of describing the present disclosure and simplifying the description, and are not intended to indicate or imply that an apparatus or an element must have a specific orientation, be constructed and operated in a specific orientation, and therefore should not be construed as limiting the present disclosure. Additionally, terms such as "first" and "second" are used for descriptive purposes only and should not be construed as indicating or implying relative importance or implicitly indicating the number of technical features. Thus, features defined by "first" and "second" may explicitly or implicitly include one or more of the features. In the description of the present disclosure, the term "plurality of" means two or more, unless otherwise clearly and specifically defined.

In the description of the present disclosure, it should be noted that unless otherwise defined explicitly and specifically, terms such as "mount", "connect", "connection" should be understood broadly. For example, "connection" may be a fixed connection, a detachable connection, or an integral connection; or may be a mechanical connection, an electrical connection, or mutual communication; or may be a direct connection or an indirect connection through an intermediate media, or may be an internal connection of two elements or an interaction relationship between two elements. For those having ordinary skill in the art, specific meanings of the foregoing terms in the present disclosure may be understood according to specific situations.

In the present disclosure, unless otherwise defined explicitly and specifically, a first feature being "above" or "below" a second feature may include the first feature and the second feature being in direct contact, or may include the first and second features not being in direct contact but being in contact by using an additional feature between them. Moreover, a first feature being "above", "upward", and "on" a second feature may include the first feature being directly above and obliquely above the second feature, or only indicate that the first feature has a higher horizontal height than the second feature. A first feature being "below", "beneath" and "underneath" the second feature includes the first feature being directly below and obliquely below the second feature, or only indicate that the first feature has a smaller horizontal height than the second feature.

The following disclosure provides many different embodiments or examples to implement different structures of the present disclosure. To simplify the disclosure of the present disclosure, components and arrangements of specific embodiments are described below. Of course, these are only examples and are not intended to limit the present disclosure. Additionally, the present disclosure may repeat reference numerals and/or reference letters in different embodiments for the purpose of simplicity and clarity, which does not indicate a relationship between the various embodiments and/or arrangements discussed. Furthermore, the present disclosure provides embodiments of various specific processes and material, but those having ordinary skill in the art may be aware of the application of other processes and/or the use of other materials.

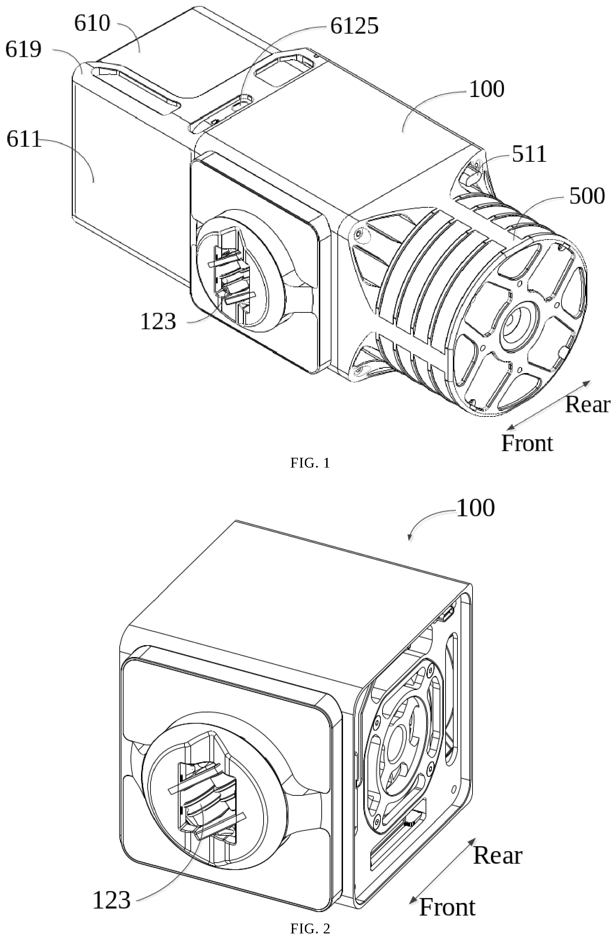

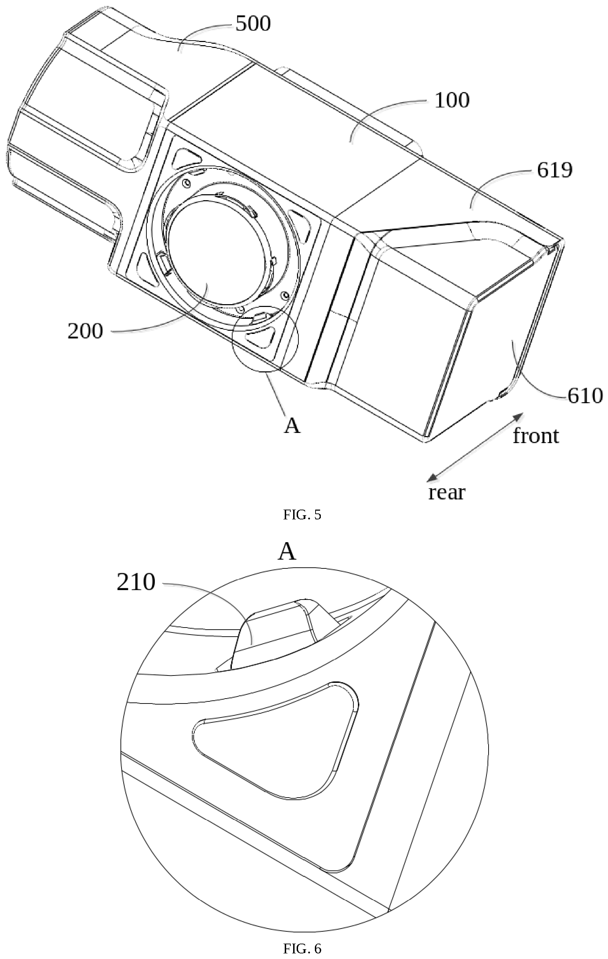

Referring to FIGS. 1-7, the output device in an embodiment of the present disclosure includes: a cable housing 100; a connecting structure 200, arranged at a rear side of the cable housing 100, and configured to be fixedly connected to a base 400, where a cable 900 in the cable housing 100 is configured to exit from a front side of the cable housing 100; a motor 500, fixedly connected to the cable housing 100 and configured to provide a traction force for the cable 900; and a power supply assembly 600, fixedly connected to the cable housing 100 and configured to supply power to the motor 500.

In an embodiment of the present disclosure, the rear side of the cable housing 100 is fixedly connected to the base 400 via the connecting structure 200, and the cable 900 is configured to exit from the front side of the cable housing 100. Thus, a lever arm may be shortened when the cable 900 is subjected to a force, so as to reduce a torque borne by the cable housing 100, which not only reduces the requirement of the strength of the cable housing 100, but also facilitates more stable fixation of the cable housing 100 on the base 400.

In some embodiments, the motor 500 may be fixed to the cable housing 100 by a bolt. For example, a reel (not shown in the figure) connected to an output shaft of the motor 500 may be arranged in the cable housing 100. The cable 900 is wound around the reel and may exit from the cable housing 100 via a cable outlet wheel 123, such as a cable outlet pulley, on the front side of the cable housing 100. A torque of the motor 500 may be transmitted to the reel to achieve a traction function.

In some embodiments, the motor 500 is connected to the cable housing 100 via a detachable connection or a quick-release connection. The power supply assembly 600 is connected to the cable housing 100 via a detachable connection or a quick-release connection. In some embodiments, the motor 500 includes a series motor set 580, and the series motor set 580 includes a plurality of sub-motors 581 with power shafts connected end to end. With a detachable connection between the motor 500 and the series motor set 580, a user may reasonably series-connect a suitable number of sub-motors 581 according to the user's needs. Power shafts of adjacent sub-motors 581 may be connected end-to-end, and both ends of the power shaft penetrate through the sub-motor 581 and are connected to adjacent motors 500, which may be connected via a coupling or via a spline 573. For example, both ends of the power shaft may be connected via a spline sleeve. Alternatively, one end of the power shaft may be configured with a spline hole while an opposite end of the power shaft is configured with the spline 573. At the same time, power supplies of the sub-motors 581 in the series motor set 580 will be connected in parallel.

In some embodiments, the power supply assembly 600 is fixedly connected to the cable housing 100 via the motor 500, and the motor 500 is located between the cable housing 100 and the power supply assembly 600. In some embodiments, the motor 500 may also be located between the cable housing 100 and the power supply assembly 600, the motor 500 provides a driving force for the cable housing 100, and the power supply assembly 600 supplies power to both the motor 500 and the cable housing 100. This layout allows a product to achieve more diverse configurations, meeting user needs. In some embodiments, the power supply assembly 600 includes one or more of a battery 610, a power adapter, a connector, and a wiring rack.

When the power supply assembly 600 is the power adapter or the connector, the user may directly connect the output device to power for use, which is suitable for more application scenarios. In some embodiments, the power supply assembly 600 may also be used in combination with the battery 610, that is, the user may connect the output device to power for use, and retain the battery 610, which can meet power supply needs when power is off or when the output device is carried out, or in other situations where electricity connection is unavailable. In some embodiments, the power supply assembly 600 may also be a power-connectable rack, such as a power-connectable gantry. At this time, the cable housing 100 and the motor 500 may be directly assembled on the gantry and connected to power, which is suitable for more application scenarios.

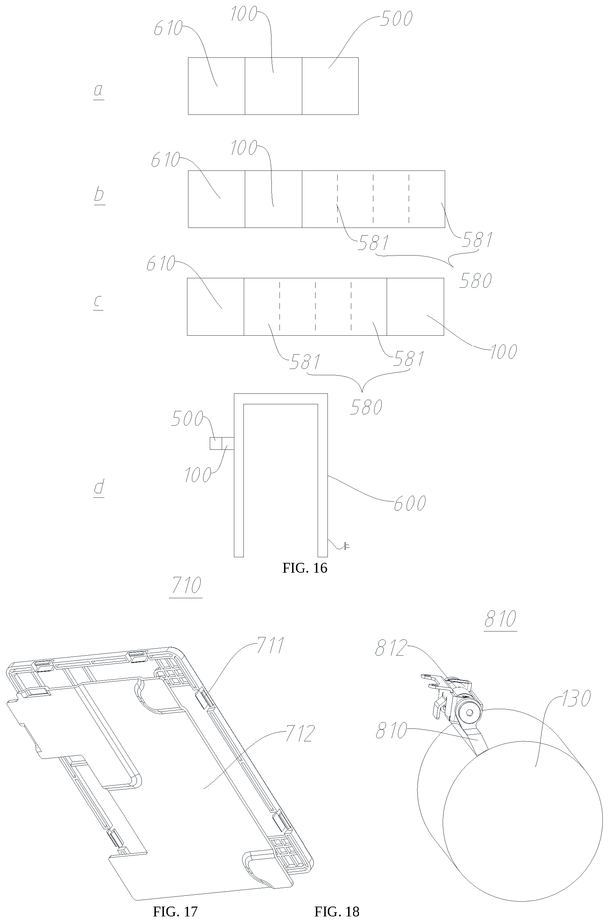

In some embodiments, as shown in FIG. 16, several possible combination scenarios are shown. FIG. 16a shows that the battery 610 and the motor 500 are located on both sides of the cable housing 100. FIG. 16b shows that the motor 500 is configured as a series motor set 580 with four sub-motors 581 connected in series. FIG. 16c shows that the series motor set 580 is located in the middle, with the battery 610 and the cable housing 100 on both sides of the series motor set 580 respectively. FIG. 16d shows that the power supply assembly 600 uses the power-connectable gantry, and the cable housing 100 and the motor 500 are connected sequentially to the power supply assembly 600. At this time, the connecting structure 200 of the cable housing 100 does not need to be fixed separately, and the gantry of the power supply assembly 600 may be configured to fix the output device.

In some embodiments, the motor 500 and the cable housing 100 are in communication with each other and define a heat dissipation channel; and/or, the cable housing 100 and the power supply assembly 600 are in communication with each other and define a heat dissipation channel; and/or, the motor 500 and the power supply assembly 600 are in communication with each other and define a heat dissipation channel.

In some embodiments, the heat dissipation channel actively dissipates heat through a heat dissipation fan 730, and the heat dissipation fan 730 is located in the heat dissipation channel.

After the motor 500, the cable housing 100, and the power supply assembly 600 are assembled, there are the heat dissipation channels in communication with each other, which may allow for ventilation and heat dissipation to help support continuous operation of the output device. For example, a channel in communication with the interior of a housing of the motor 500 may be left at a contact surface between the motor 500 and the cable housing 100, and a channel in communication with the interior of the cable housing 100 may be left at the contact surface between the cable housing 100 and the motor 500. When the motor 500 is connected to the cable housing 100, these two channels will also be in communication with each other to define the heat dissipation channel, and ventilation and heat dissipation will be performed simultaneously. In some embodiments, the heat dissipation fan 730 may also be provided to actively dissipate heat in the heat dissipation channel. The heat dissipation fan 730 may be specifically located on the cable housing 100, the motor 500, or the power supply assembly 600 and located in the heat dissipation channel.

In some embodiments, a heat dissipation cover 710 is provided on a shell 571 of the output device. A structural plate 711 can provide structural support for the heat dissipation cover 710, and the structural plate 711 has higher strength than the heat dissipation plate 712. The structural plate 711 has good thermal conductivity, and can absorb heat inside the shell 571 and transfer the heat outside the shell 571. In some embodiments, at least one heat dissipation hole 1331 is further defined on the structural plate 711 to conduct heat from the heat dissipation plate 712 to the outside. The heat dissipation plate 712 is located inside the structural plate 711. The heat dissipation plate 712 is detachably connected to the structural plate 711, to facilitate assembly and replacement. In some embodiments, the heat dissipation plate 712 is partially recessed inwardly to contact a heat-generating element in the shell 571, so as to better transfer heat to the outside. In some embodiments, the structural plate 711 includes a support portion inwardly at a position corresponding to an inward recess of the heat dissipation plate 712 to provide support, which may ensure close contact between the heat dissipation plate 712 and the heat-generating element while also transferring heat to the structural plate 711. For example, as shown in FIG. 17, the heat dissipation plate 712 and the structural plate 711 are connected by a snap-fit, and the heat dissipation plate 712 defines at least one inward recess according to a position of the heat-generating element in the shell 571, and the structural plate 711 includes the support portion at the corresponding position.

In some embodiments, a locking apparatus 810 is also provided. The locking apparatus 810 includes a movable locking arm 811. The locking arm 811 includes a first state in which the locking arm 811 contacts and presses against a locked shaft 813 when power is off and a second state in which the locking arm 811 is away/distal from the locked shaft 813 when power is on. The locked shaft 813 may be any winding reel 130 or any cable-guiding wheel (such as a cable-guiding pulley) through which the cable 900 passes, or a drive shaft or a motor shaft where the winding reel 130 is located, or any transmission shaft of a transmission assembly between the winding reel 130 and the motor 500. Preferably, when power is off, the locking arm 811 locks the locked shaft 813 via an elastic member 243, a magnetic member 1415, or a mechanical self-locking transmission assembly 814, or contacts and presses against the locked shaft 813 through friction self-locking; and/or, when power is on, the locking arm 811 may be away from the locked shaft 813 through a magnetic force of a locking electromagnet or a locking motor 812.

The output device also includes the locking apparatus 810, which is configured to lock any winding reel 130 or cable-guiding wheel through which the cable 900 passes, or a drive shaft or a motor shaft where the winding reel 130 is located, or any transmission shaft of a transmission assembly between the winding reel 130 and the motor 500 when the device loses power or is de-energized, so as to help reduce the possibility of f the winding reel 130 rotating and a load falling to ground when the load is suspended by the cable 900. At this time, the locking arm 811 is in the first state. The locking arm 811 of the locking apparatus 810 may be rotatably or slidably mounted. When the locking arm 811 is in the second state, the locking arm 811 rotates or slides away from the locked shaft 813 to stop locking, to allow the output device to operate normally. Preferably, an elastic member 243 or a groove configured to increase friction is provided on a contact surface between the locking arm 811 and the locked shaft 813.

Preferably, in the first state, a locking force exerted on the locking arm 811 is provided by an elastic force, or the magnetic force, or the mechanical self-locking transmission assembly 814. For example, the elastic force can be exerted by the elastic member 243, or the magnetic force can be exerted by the magnetic member 1415. The mechanical self-locking transmission assembly 814, such as a self-locking worm gear, can also be provided, so that the locking arm 811 can be driven by the transmission assembly to rotate and press against or leave the locked shaft 813, and cannot be driven by the locked shaft 813.

Preferably, in the first state, before power loss or prior to power-off, the locking motor 812 or the locking electromagnet drives the locking arm 811 to contact the locked shaft 813. At this time, a force exerted by the locking arm 811 on the transmission shaft is within a friction angle between the locking arm 811 and the transmission shaft or between the locking arm 811 and the winding reel 130, that is, the locking arm 811 can form a frictional self-locking with the transmission shaft or the winding reel 130. At this time, self-locking can be achieved without setting an additional external force, that is, after power loss or after power-off, the locking arm 811 may continue to lock the locked shaft 813 when the locking motor 812 or the electromagnet is de-energized.

In some embodiments, in the second state, the locking arm 811 is driven by the locking motor 812 or the electromagnet to rotate or slide away from the locked transmission shaft.

For example, as shown in FIG. 18, before power loss, the locking motor 812 drives the locking arm 811 to rotate into contact with the winding reel 130. After power loss, the locking motor 812 is de-energized, and the load drives the winding reel 130 via the cable 900. The rotation of the winding reel 130 further increases contact effect of the locking arm 811, thereby locking the winding reel 130. After the locking motor 812 is started, the locking motor 812 drives the locking arm 811 to rotate away from the winding reel 130, so as to release the lock.

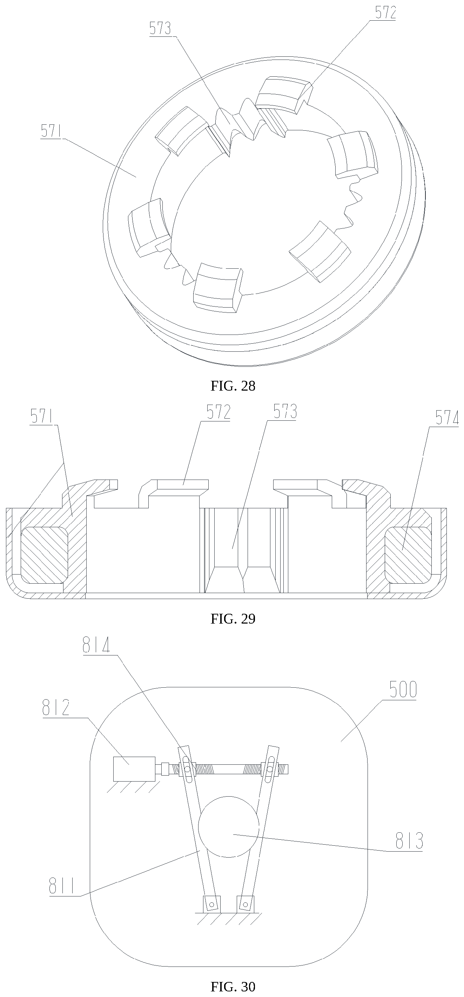

For example, as shown in FIG. 30, before power loss, the locking motor 812 drives the locking arm 811 to rotate and press against the motor shaft (the locked shaft 813) via the mechanical self-locking transmission assembly 814. After power loss, since the mechanical self-locking transmission assembly 814 is a self-locking nut-and-screw transmission, a nut connected to the locking arm 811 cannot drive a screw to rotate, thereby maintaining a locking state. When power is supplied or when power-on, the locking motor 812 drives the locking arm 811 away from the motor shaft (the locked shaft 813) via the mechanical self-locking transmission assembly 814. Two locking arms 811 are provided to lock the motor shaft (the locked shaft 813) from two directions respectively.

In some embodiments, referring to FIG. 1, FIG. 5, and FIG. 7, the motor 500 and the power supply assembly 600 are arranged on two opposite side surfaces of the cable housing 100.

In an embodiment, a weight of the motor 500 and a weight of the power supply assembly 600 (for example, the power supply assembly 600 may include the battery 610, etc.) are relatively large. By arranging the motor 500 and the power supply assembly 600 on the opposite sides of the cable housing 100, the weight thereof can be balanced, and a center of the output device is roughly located in the middle, which facilitates the user to hold the output device stably.

It should also be noted that when the user is accustomed to holding the output device with both hands, design of the embodiment can facilitate the user to hold the motor 500 and the power supply assembly 600 with both hands respectively, so that the user's hands bear weight evenly, which also improves the stability of holding the output device and reduces the possibility of the user accidentally dropping the output device when holding the output device.

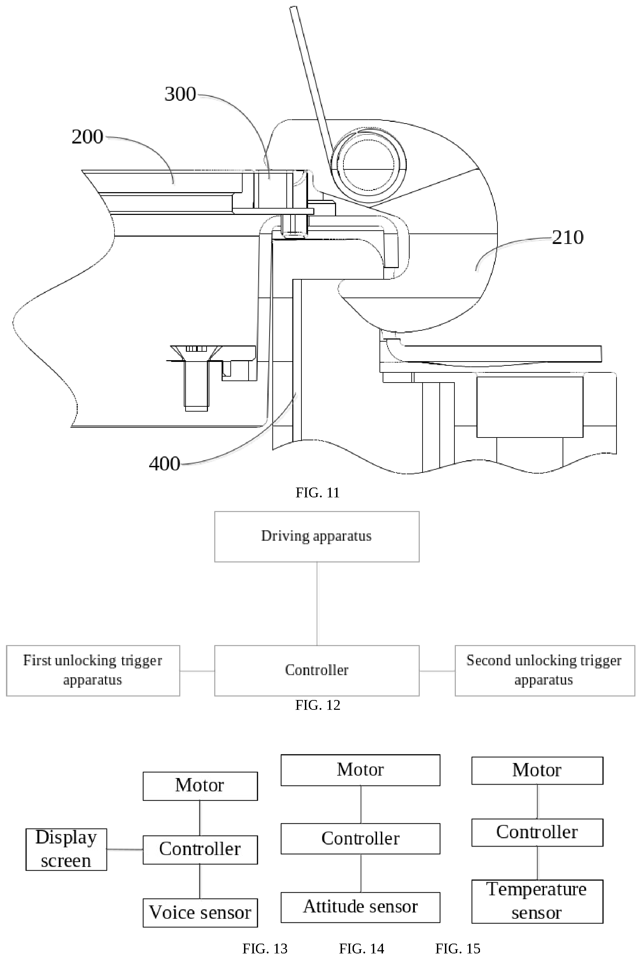

In some embodiments, referring to FIG. 1 and FIG. 12, the output device may further include: a locking assembly, configured to lock the connecting structure 200; a first unlocking trigger apparatus 511 (for example, a push switch), disposed on the motor 500 and communicatively connected to the locking assembly; and a second unlocking trigger apparatus 6125 (for example, a push switch), disposed on the power supply assembly 600 and communicatively connected to the locking assembly. The locking assembly is configured to unlock the connecting structure 200 when both the first unlocking trigger apparatus 511 and the second unlocking trigger apparatus 6125 are triggered.

In the embodiment, by arranging the first unlocking trigger apparatus and the second unlocking trigger apparatus on the motor 500 and the power supply assembly 600 respectively, and when both the first unlocking trigger apparatus 511 and the second unlocking trigger apparatus 6125 are triggered, the connecting structure 200 can be unlocked. Thus, the user can be guided to hold the output device with both hands to detach the output device from the base 400, reducing the possibility of accidental falling due to unstable holding when the output device is detached from the base 400, thereby improving user safety during use.

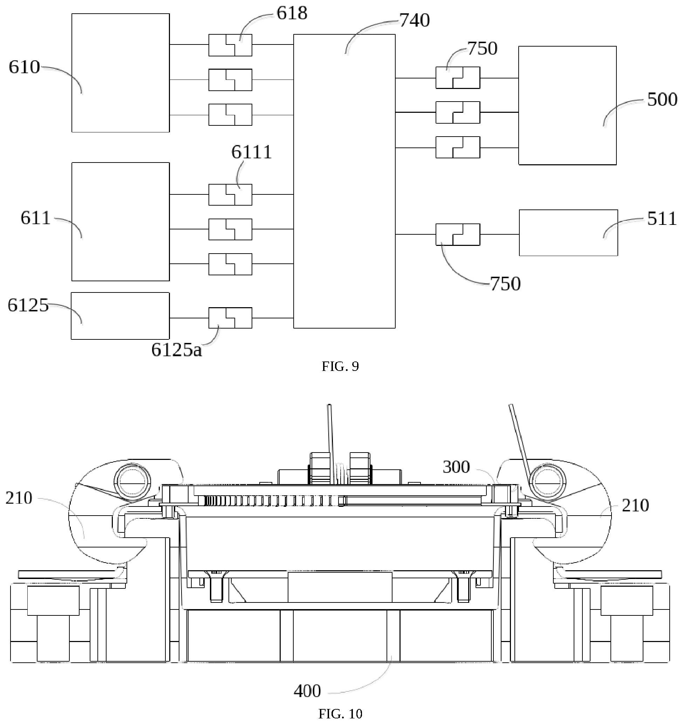

In some embodiments, referring to FIG. 10 to FIG. 12, the locking assembly may include: a locking member 300, movably disposed on the cable housing 100, and configured to abut against the connecting structure 200 to lock the connecting structure 200; and a driving apparatus in transmission connection with the locking member 300 and connected to the first unlocking trigger apparatus 511 and the second unlocking trigger apparatus 6125. The driving apparatus is configured to: drive the locking member 300 to move to unlock the connecting structure 200 when both the first unlocking trigger apparatus 511 and the second unlocking trigger apparatus 6125 are triggered.

In the embodiment, the locking member 300 is driven by the driving apparatus to be movable relative to the cable housing 100. For example, the locking member 300 may be slidably disposed on the cable housing 100, and an output shaft of the driving apparatus (for example, a motor) may be in driving connection with the locking member 300 via a gear-rack engagement. Thus, when the driving apparatus operates, the driving apparatus can drive the locking member 300 to slide relative to the cable housing 100.

In some embodiments, referring to FIG. 10 and FIG. 11, the connecting structure 200 may include: an engaging member 210 (for example, a hook) movably disposed on the cable housing 100, the engaging member 210 is engaged with the base 400 to fix the cable housing 100 to the base 400. When the engaging member 210 is engaged with the base 400, the locking member 300 can abut against the engaging member 210 to limit the movement of the engaging member 210. The driving apparatus is configured to: drive the locking member 300 to move to release the abutment between the locking member 300 and the engaging member 210 when both the first unlocking trigger apparatus 511 and the second unlocking trigger apparatus 6125 are triggered.

For example, referring to FIG. 10 and FIG. 11, the engaging member 210 may be rotatably disposed on the cable housing 100. After the engaging member 210 is engaged with the base 400, the output device can be fixed on the base 400. Then, the locking member 300 can abut against the engaging member 210 to limit the engaging member 210 from rotating outward of the base 400 to disengage from the base 400, thereby locking the engaging member 210. When both the first unlocking trigger apparatus 511 and the second unlocking trigger apparatus 6125 are triggered, the driving apparatus can drive the locking member 300 to move, so that the locking member 300 and the engaging member 210 are released from abutment, and the engaging member 210 can be rotated outward of the base 400 and disengage from the base 400, thus releasing the output device from the base 400.

In some embodiments, the power supply assembly 600 may include: the battery 610, fixed on the cable housing 100 and electrically connected to a printed circuit board (PCB) 740 on the cable housing 100; and a display screen 611, fixed on the cable housing 100 and electrically connected to the PCB 740.

In this solution, the battery 610 can supply power to the motor 500 and related components on the PCB 740. The display screen 611 can display working status information of the output device, which may facilitate user operation and use of the output device.

In some embodiments, the display screen 611 may be a touch screen, for example. A user can issue/send a control command by touching the display screen 611, and the output device may operate in response to the control command, which may make it more convenient for the user to operate and use the output device.

In some embodiments, the display screen 611 is located at a side of the battery 610.

For example, the display screen 611 may be located at a front side of the battery 610, so that the user can easily view the information displayed on the display screen 611.

In some embodiments, the power supply assembly 600 may further include a battery holder 619 fixedly connected to the cable housing 100. Both the battery 610 and the display screen 611 are fixedly connected to the battery holder 619. For example, the battery holder 619 may be fixed to the cable housing 100 via a screw.

In some embodiments, the second unlocking trigger apparatus 6125 may be disposed on the battery holder 619.

In another possible implementation, the second unlocking trigger apparatus 6125 may be disposed on the battery 610. A relief hole corresponding to the second unlocking trigger apparatus 6125 may be defined on the battery holder 619, which may allow the user to directly press or touch the second unlocking trigger apparatus 6125 through the relief hole.

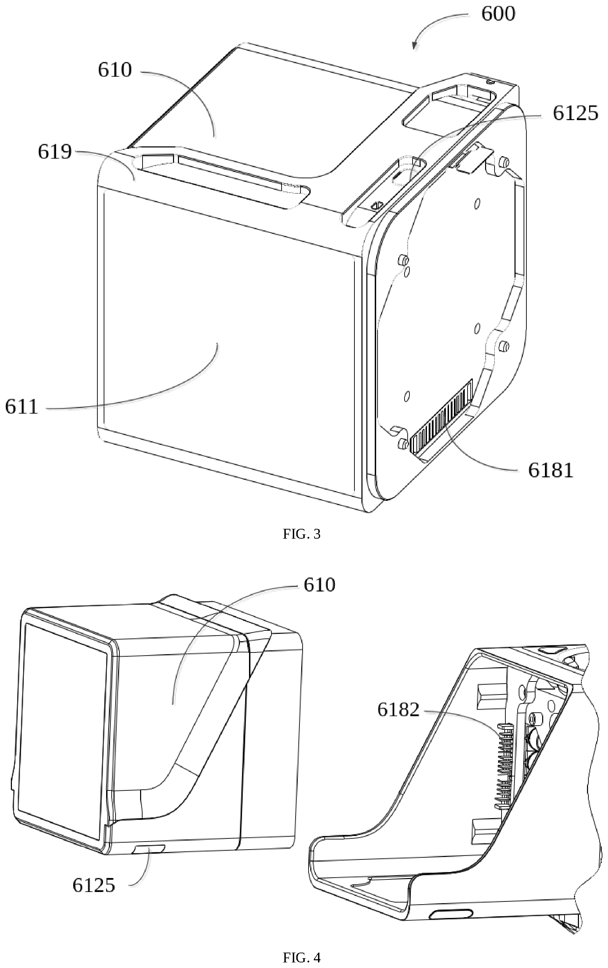

In some embodiments, referring to FIG. 3, FIG. 4, and FIG. 9, the battery 610 is electrically connected to the PCB 740 via a first quick-connect connector 618, thus facilitating quick disassembly of the battery 610.

Specifically, the first quick-connect connector 618 may include a first quick-connect sub-connector 6181 and a second quick-connect sub-connector 6182. The first quick-connect sub-connector 6181 is disposed on the battery 610, and the second quick-connect sub-connector 6182 is disposed on the PCB 740. When the battery 610 is mounted, the first quick-connect sub-connector 6181 is inserted into the second quick-connect sub-connector 6182, which may achieve electrical connection between the battery 610 and the PCB 740.

Referring to FIG. 9, the display screen 611 is electrically connected to the PCB 740 via a second quick-connect connector 6111. In this solution, by providing the second quick-connect connector 6111, the display screen 611 can be quickly disassembled.

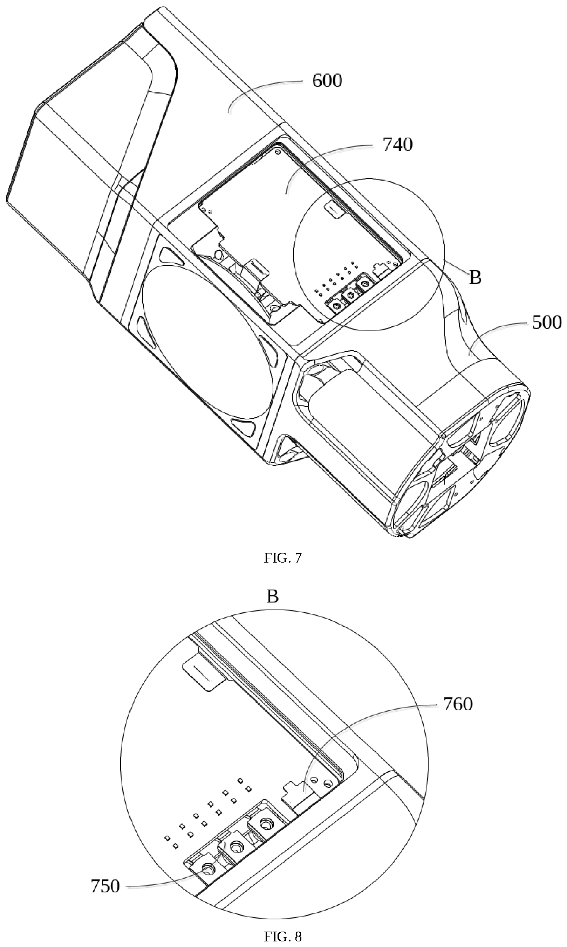

In some embodiments, referring to FIGS. 7 to 9, the motor 500 is electrically connected to the PCB 740 on the cable housing 100 via a third quick-connect connector 750. In this solution, the third quick-connect connector 750 facilitates quick disassembly of the motor 500, which may make maintenance and repair more convenient.

In some embodiments, referring to FIGS. 7 to 9, the first unlocking trigger apparatus 511 is connected to the PCB 740 on the cable housing 100 via a fourth quick-connect connector 760.

In some embodiments, referring to FIG. 9, the second unlocking trigger apparatus 6125 is connected to the PCB 740 on the cable housing 100 via a fifth quick-connect connector 6125a.

In some embodiments, referring to FIG. 11, the output device may further include a voice sensor communicatively connected to a controller of the output device. The controller is configured to control the motor 500 to operate according to a voice command received by the voice sensor. In this solution, voice control of the output device can be achieved by providing the voice sensor.

Further, referring to FIG. 13, the controller may also be communicatively connected to the display screen 611, and the working status information of the output device (e.g., a current traction force, etc.) may be displayed via the display screen 611, which may facilitate the user to accurately operate the output device as needed.

In some embodiments, the controller is further configured to control the motor 500 to stop operation when the voice command received by the voice sensor exceeds a preset loudness. In this solution, when the user encounters an emergency, the user can stop the motor 500 by transmitting a sound exceeding the preset loudness, thereby improving safety of use.

In some embodiments, referring to FIG. 14, the output device may further include an attitude sensor communicatively connected to the controller of the output device. The controller is configured to determine current motion state information of the output device according to the attitude sensor, and control the motor 500 to operate according to the motion state information. The motion state information includes at least one of a current acceleration of the output device and a current angle of the output device.

In some embodiments, the attitude sensor may be a gyroscope, and the gyroscope may be a mechanical gyroscope or a Micro Electro Mechanical Systems (MEMS). It can be understood that the current acceleration of the output device can be determined by the gyroscope. By continuously tracking the current acceleration of the output device, a current state of the output device, the current angle of the output device, and whether the output device is oscillating, etc., can be determined, so that abnormalities can be discovered in time during the use of the output device, and corresponding measures can be taken.

In some embodiments, if the current acceleration of the output device exceeds a preset acceleration threshold, the output device may accidentally fall off, and the motor 500 can be controlled to stop operation at this time.

In some embodiments, referring to FIG. 15, the output device may further include a first temperature sensor configured to detect the temperature of the motor 500 and communicatively connected to the controller of the output device. The controller is configured to reduce an output power of the motor 500 when it is determined that the temperature of the motor 500 exceeds a preset first temperature threshold.

In this solution, when the temperature of the motor 500 exceeds the preset first temperature threshold, it can reduce the overheating of the motor 500 by reducing the output power of the motor 500. For example, when the temperature of the motor 500 is very high, the motor 500 can be controlled to stop operation immediately. When the temperature of the motor 500 is relatively high, the operation of the motor 500 can be appropriately reduced to decrease the temperature rise of the motor 500.

In some embodiments, the controller is further configured to control a prompt apparatus to issue prompt information when the temperature of the motor 500 exceeds a preset second temperature threshold. The second temperature threshold is less than the first temperature threshold.

In this solution, when the temperature of the motor 500 exceeds the preset second temperature threshold, the prompt apparatus is controlled to issue/send prompt information. The prompt information can be in various forms. For example, voice prompt information can be issued via a loudspeaker or a buzzer to prompt the user that the temperature of the motor 500 is relatively high. Alternatively, the motor 500 can be controlled to generate vibration to prompt the user. Alternatively, display information corresponding to relatively high temperature of the motor 500 can be displayed via the display screen 611. Of course, when the output device is wirelessly connected to a user terminal via Bluetooth or the like, the prompt information can also be pushed to the user terminal.

The prompt information may remind the user to use the motor 500 gently to reduce the temperature rise of the motor 500, or remind the user not to touch the motor 500 to prevent burns, etc. The present disclosure does not limit this.

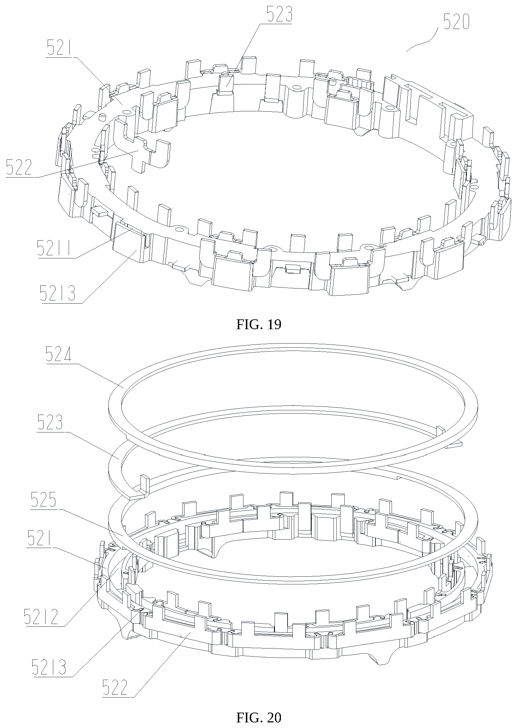

A connecting busbar 520 and the motor 500 provided in some embodiments are described below with reference to FIGS. 19-29.

An embodiment of a first aspect of the present disclosure provides the connecting busbar 520, and the connecting busbar 520 includes a mounting base 521 and a first connecting member 522 disposed on the mounting base 521. The mounting base 521 is an insulator, there is at least one first connecting member 522, the first connecting member 522 is inserted into the mounting base 521, and the first connecting member 522 includes at least two first connecting ends 5221 configured to be connected to the coil 550. Specifically, the mounting base 521 is an insulator, which can be formed by injection molding, can support the first connecting member 522, and play an isolating role to prevent the first connecting member 522 from being connected in series with other components. The first connecting member 522 is assembled to the mounting base 521 by plugging. The first connecting member 522 includes the at least two first connecting ends 5221. When the connecting busbar 520 is assembled to the motor 500, the first connecting end 5221 is configured to be connected to the coil 550 to achieve a connection function. The coil 550 connected to the first connecting end 5221 can be either a stator winding coil or a rotor winding coil. Compared with a traditional assembly method using a bolt connection, the first connecting member 522 is assembled to the mounting base 521 by plugging, which has a simple structure and is more convenient to assemble.

In some embodiments, the connecting busbar 520 includes a mounting base 521 and a second connecting member 523 disposed on the mounting base 521. The mounting base 521 is an insulator. There is at least one second connecting member 523, the second connecting member 523 is disposed in the mounting base 521, and the second connecting member 523 includes at least two second connecting ends 5231 configured to be connected to the coil 550. Specifically, the mounting base 521 is an insulator, which can be formed by injection molding, can support the second connecting member 523, and play an isolating role to prevent the second connecting member 523 from being connected in series with other components. The second connecting member 523 is disposed in the mounting base 521 by prefabrication or subsequent assembly. The second connecting member 523 is a conductor and includes the at least two second connecting ends 5231. When the connecting busbar 520 is assembled to the motor 500, the second connecting end 5231 is configured to be connected to the coil 550 to achieve a connection function. The coil 550 connected to the second connecting end 5231 can be either a stator winding coil 550 or a rotor winding coil 550.

In some embodiments, the connecting busbar 520 includes a mounting base 521, a first connecting member 522 and a second connecting member 523 disposed on the mounting base 521. The mounting base 521 is an insulator. There is at least one first connecting member 522, and the first connecting member 522 is inserted into the mounting base 521. The first connecting member 522 includes the at least two first connecting ends 5221 configured to be connected to the coil 550. There is at least one second connecting member 523, the second connecting member 523 is inserted into the mounting base 521, and the second connecting member 523 includes at least two second connecting ends 5231 configured to be connected to the coil 550. Specifically, the mounting base 521 is an insulator, which can be formed by injection molding, can support the first connecting member 522 and the second connecting member 523, and play an isolating role to prevent the first connecting member 522 and the second connecting member 523 from being connected in series with other components. The first connecting member 522 is assembled to the mounting base 521 by plugging, and the second connecting member 523 is disposed in the mounting base 521 by prefabrication or subsequent assembly. Both the first connecting member 522 and the second connecting member 523 are conductors. The first connecting member 522 includes the at least two first connecting ends 5221. The second connecting member 523 includes at least two second connecting ends 5231. When the connecting busbar 520 is assembled to the motor 500, both the first connecting end 5221 and the second connecting end 5231 are configured to be connected to the coil 550 to achieve a connection function. The coil 550 connected to the first connecting end 5221 and the second connecting end 5231 can be either the stator winding coil 550 or the rotor winding coil 550.

The connecting busbar 520 disclosed in some embodiments of the present disclosure provides positioning and fixation for the connecting member via the mounting base 521, which may help reduce irregular wiring between coils 550. The use of the mounting base 521 simplifies installation of the connecting busbar 520. The second connecting member 523 pre-installed inside the mounting base 521 can be directly connected to the corresponding coil 550 during installation. The first connecting member 522 inserted into the mounting base 521 can first assemble the mounting base 521 to the motor 500, and the first connecting member 522 is inserted into the mounting base 521 and connect the corresponding coil 550. The first connecting member 522 can also be combined with the mounting base 521 and then assembled into the motor 500 together to achieve the connection between the first connecting member 522 and the mounting base 521.

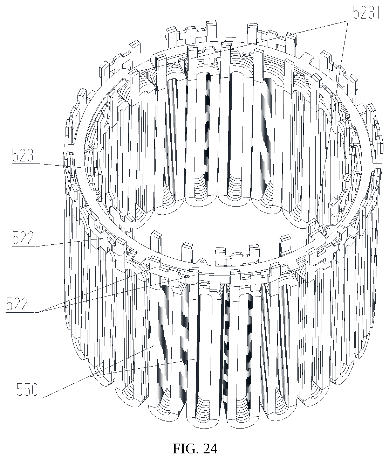

Referring to FIG. 24, in some embodiments, two adjacent coils 550 that are relatively spaced close to each other can be connected to each other via the first connecting member 522. At this time, the two first connecting ends 5221 of the first connecting member 522 are relatively spaced close to each other, so that a volume of the first connecting member 522 is small, which may ensure a strength of the first connecting member 522 during plugging and assembly. In some embodiments, two adjacent coils 550 that are spaced apart from each other can be connected to each other via the second connecting member 523. At this time, the second connecting ends 5231 of the second connecting member 523 are spaced apart from each other, and the second connecting member 523 is disposed in the mounting base 521, which can help support the strength and can be designed to be larger, and is suitable for connecting non-adjacent coils 550 or spaced-apart coils 550 that need to be connected. It should be noted that the first connecting member 522 and the second connecting member 523 can be used separately or simultaneously. The above-mentioned first connecting member 522 is configured to connect adjacent coils 550, and the second connecting member 523 is configured to be connected to the spaced-apart coils 550, which is merely an exemplary embodiment. In some embodiments, the first connecting member 522 is configured to be connected to the spaced-apart coils 550, and the second connecting member 523 is configured to be connected to two adjacent coils 550.

Referring to FIGS. 19-20, in some embodiments, the mounting base 521 simultaneously includes both the first connecting member 522 and the second connecting member 523. The first connecting ends 5221 of the first connecting member 522 are spaced close to each other and can connect two adjacent coils 550. The second connecting ends 5231 of the second connecting member 523 are spaced apart from each other and can connect the spaced-apart coils 550. The two adjacent coils 550 are connected to each other via the first connecting member 522, and the spaced-apart coils 550 are connected to each other via the second connecting member 523, which may allow adjustment according to connection requirements of the coils 550, and enable flexible use of the first connecting member 522 and the second connecting member 523 to connect the coils 550.

In some embodiments, at least one insertion slot 5211 is defined on the mounting base 521 and is inserted into the first connecting member 522. The first connecting member 522 further includes an insertion portion 5222, and the insertion portion 5222 is configured to be inserted into the insertion slot 5211. In some embodiments, the mounting base 521 is annular, and insertion slots 5211 are defined on an inner side of the mounting base 521, an outer side of the mounting base 521, or both the inner side and the outer side of the mounting base 521. The number of insertion slots 5211 can correspond to the number of the first connecting members 522. After the insertion portion 5222 of the first connecting member 522 is inserted into the insertion slot 5211, the first connecting end 5221 is ensured to be exposed on the inner side or the outer side of the mounting base 521. At this time, after the connecting busbar 520 is assembled to the motor 500, the first connecting end 5221 can be connected to the coil 550. Of course, the mounting base 521 can also be assembled to the motor 500 first, and then the first connecting member 522 can be inserted.

Referring to FIG. 19, in some embodiments, a third protruding portion 5213 is provided on a side wall of the mounting base 521, and the insertion slot 5211 is defined on the third protruding portion 5213. The insertion slot 5211 is defined by defining a vertical slot downward from an upper end of the third protruding portion 5213, which may ensure that after the insertion portion 5222 of the first connecting member 522 is inserted into the insertion slot 5211, the first connecting end 5221 is exposed on the inner side or the outer side of the mounting base 521, which may facilitate subsequent connection with the coil 550.

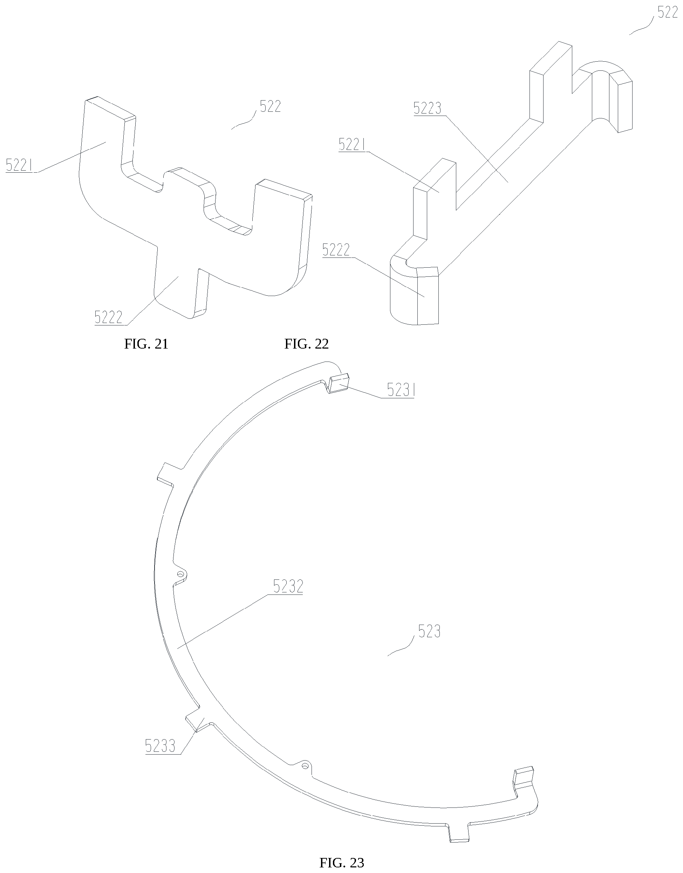

Referring to FIG. 21, in some embodiments, each first connecting member 522 includes the insertion portion 5222 and two first connecting ends 5221. The insertion portion 5222 is connected to the two first connecting ends 5221, and the two first connecting ends 5221 are located on both sides of the insertion portion 5222. A middle part of the first connecting member 522 is the insertion portion 5222, and parts of the first connecting member 522 extending from both sides are the first connecting ends 5221. The corresponding insertion slot 5211 can be defined on the third protruding portion 5213 protruding from the side wall of the mounting base 521. The insertion slot 5211 is defined vertically on an upper side of the third protruding portion 5213. After the insertion portion 5222 is inserted into the insertion slot 5211, the two first connecting ends 5221 are on the outside, which can be conveniently connected to the coil 550.

Referring to FIG. 22, in other embodiments, each first connecting member 522 includes two insertion portions 5222 and two first connecting ends 5221. The two first connecting ends 5221 are connected to each other. The two insertion portions 5222 are located on both sides of the first connecting ends 5221. The insertion portion 5222 and the first connecting end 5221 are arranged at an angle. The two first connecting ends 5221 are connected by a long strip-shaped first connecting portion 5223, and are connected to a side of the first connecting portion 5223. Alternatively, the two first connecting ends 5221 and the first connecting portion 5223 are an integral structure. Two ends of the first connecting portion 5223 are connected to the insertion portions 5222. Alternatively, the two ends of the first connecting portion 5223 are bent to form the insertion portions 5222. The insertion portions 5222 and the first connecting end 5221 are arranged at the angle, which may make the connection between the first connecting member 522 and the insertion slot 5211 more stable.

In some embodiments, the angle between the insertion portion 5222 and the first connecting end 5221 is less than 90 degrees. That is, ends of the two insertion portions 5222 at both ends should face each other, which may further improve the stability of the plug-in connection. Meanwhile, a size of the first connecting member 522 can be minimized, so that the mounting base 521 can stack more first connecting members 522.

Referring to FIG. 19, FIG. 20, FIG. 24, and FIG. 25, in some embodiments, the mounting base 521 is annular to accommodate a rotating body of the motor 500. The coil 550 of the motor 500 is arranged peripherally, and the annular mounting base 521 can also simplify installation.

As shown in FIG. 20, in some embodiments, an annular groove 5212 is defined on the mounting base 521. The second connecting member 523 is mounted in the annular groove 5212, and the second connecting end 5231 extends out of the annular groove 5212. In this subsequent installation method, when manufacturing the mounting base 521, the annular groove 5212 is pre-formed on a top surface of the mounting base 521, which may leave an opening for the second connecting end 5231 to extend out. The second connecting member 523 is then mounted in the annular groove 5212, and the second connecting end 5231 extends out of the annular groove 5212 via the opening.

Further, the connecting busbar 520 also includes a connecting cover plate 524. The connecting cover plate 524 is combined with the annular groove 5212 to fix the second connecting member 523, so that installation of the second connecting member 523 is more stable.

In some embodiments, there are a plurality of second connecting members 523. When the plurality of second connecting members 523 are mounted in the annular groove 5212, adjacent two of the second connecting members 523 are isolated by an insulating pad 525. In this method of assembling the second connecting members 523 to the mounting base 521, to facilitate processing and assembly, the annular groove 5212 is not designed with a structure to isolate adjacent connecting busbars 520. Therefore, when mounting the second connecting members 523, an insulating pad 525 is mounted between the adjacent two of the second connecting members 523 for isolation, which may reduce an occurrence of direct connection of the second connecting members 523.

Referring to FIG. 19, in other embodiments, the second connecting member 523 is embedded in the mounting base 521, and the second connecting end 5231 extends out from the mounting base 521. In this manner, the second connecting member 523 and the mounting base 521 are pre-formed and do not need subsequent assembly, which may greatly simplify assembly process.

In some embodiments, the second connecting member 523 and the mounting base 521 are pre-formed by injection molding. The second connecting member 523 further includes a positioning portion 5233. The positioning portion 5233 extends out from the mounting base 521 after molding, and the positioning portion 5233 is configured to position the second connecting member 523 during injection molding.

Referring to FIG. 23, regardless of subsequent installation or prefabrication, the second connecting member 523 includes a second connecting portion 5232. The second connecting end 5231 extends from or is connected to a side of the second connecting portion 5232 to form an angle. In the pre-forming method, a positioning portion 5233 also extends from or is connected to the side of the second connecting portion 5232. During injection molding, the second connecting member 523 is positioned in a mold via the positioning portion 5233, and it may be useful to help support that the plurality of second connecting members 523 do not contact each other. Thus, the mounting base 521 with an embedded second connecting member 523 can be obtained through injection molding.

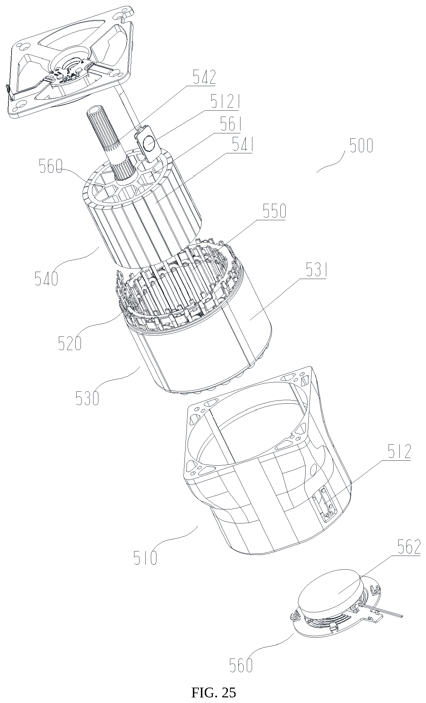

An embodiment of a second aspect of the present disclosure provides the motor 500. As shown in FIG. 25, the motor 500 includes a motor housing 510, a stator assembly 530, and a rotor assembly 540. The stator assembly 530 is fixedly disposed in the motor housing 510, and the rotor assembly 540 is rotatably disposed in the motor housing 510. The stator assembly 530 and/or the rotor assembly 540 includes the coil 550 and the connecting busbar 520 according to any one of the embodiments of the first aspect. All or part of the coil 550 is connected to the first connecting end 5221 or the second connecting end 5231 of the connecting busbar 520. By using the connecting busbar 520, the motor 500 is more concise in design, easier to assemble, and more stable.

In some embodiments, the stator assembly 530 of the motor 500 includes the coil 550, and the connecting busbar 520 includes the mounting base 521, and the first connecting member 522 and the second connecting member 523 disposed on the mounting base 521. The first connecting ends 5221 of the first connecting member 522 are spaced close to each other and can connect two adjacent coils 550. The second connecting ends 5231 of the second connecting member 523 are spaced apart from each other and can connect the spaced-apart coils 550. When the stator assembly 530 is assembled, the first connecting ends 5221 of the first connecting member 522 are connected to two adjacent coils 550, and the second connecting end 5231 of the second connecting member 523 is connected to the spaced-apart coils 550, working together to power the coil 550. Of course, the motor 500 may be configured such that the coil 550 is provided on the rotor assembly 540.

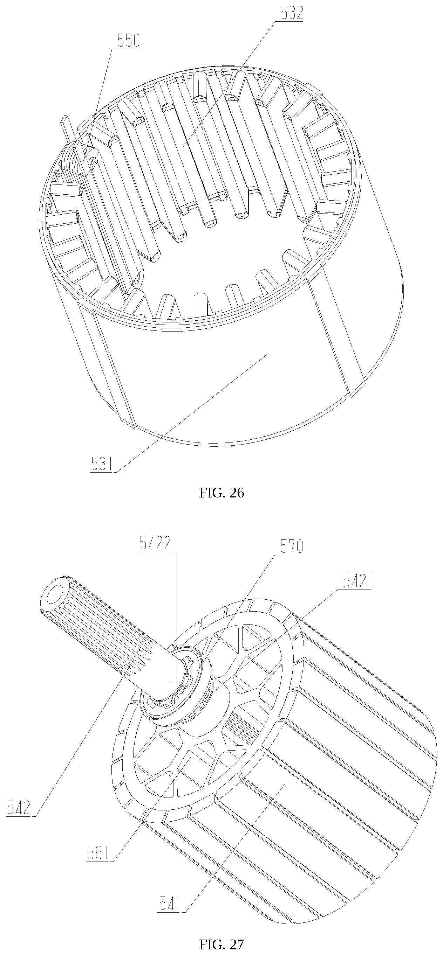

Further, the motor 500 also includes an iron core, and the iron core is annular. A plurality of winding frames or bobbins 532 are provided in the iron core. A flat wire is wound on/around the winding frame 532 to form the coil 550, that is, the coil 550 may include the flat wire wound on/around the winding frame 532. The coil 550 is wound with the flat wire, which has a smaller volume, less material and lower cost at the same power. A contact area between flat wires is large, and heat dissipation and heat conduction are better, which is beneficial to improving the heat dissipation effect of the motor 500. Moreover, a terminal of the coil 550 wound by the flat wires is sheet-shaped, and the first connecting end 5221 of the first connecting member 522 and the second connecting end 5231 of the second connecting member 523 are also in sheet shape, which can better and more conveniently achieve the connection between a first terminal, a second terminal and the coil 550. Referring to FIG. 26, in some embodiments, the stator assembly 530 employs a winding method. The stator core 531 is annular, and the plurality of winding frames 532 are peripherally arranged inside the stator core. The flat wire is wound on the winding frames 532.

The heat dissipation effect has a great influence on performance of the motor 500. When the motor 500 is configured for use in equipment that needs to repeatedly rotate forward and reverse, such as a cable output device, higher heat dissipation requirements are imposed. In some embodiments, the motor 500 further includes a heat dissipation fan 730. The rotor assembly 540 and/or the stator assembly 530 includes an avoidance portion configured to mount the heat dissipation fan 730. The heat dissipation fan 730 is mounted in the avoidance portion and accelerates air flow by rotating, which may enhance the heat dissipation effect of the motor 500.

As shown in FIG. 25 and FIG. 27, in some embodiments, the heat dissipation fan 730 is a passive fan, and the heat dissipation fan 730 is disposed in the avoidance portion of the rotor assembly 540. For example, the rotor core 541 of the rotor assembly 540 is annular, and the heat dissipation fan 730 is fixedly disposed in an annular structure. When a rotor rotates, the heat dissipation fan 730 can be driven to rotate synchronously, which may effectively improve heat dissipation capacity of the motor 500.

However, when the motor 500 needs to frequently rotate forward and reverse or operates at a low speed, the above-mentioned heat dissipation method using the passive fan exhibits a problem of unstable heat dissipation capacity, which is greatly affected by the forward and reverse rotation and the rotational speed of the motor 500. This imposes certain limitations on improving the heat dissipation capacity of the motor 500 and cannot help support that the motor 500 operates at an appropriate operating temperature. Based on this, referring to FIG. 25, in other embodiments, the heat dissipation fan 730 is an active fan 562. The heat dissipation fan 730 is connected to the stator assembly 530 or the motor housing 510, and rotates independently relative to the rotor assembly 540. For example, the iron core of the rotor assembly 540 is annular, and the heat dissipation fan 730 is located in the annular structure but does not contact the iron core. Alternatively, there is a gap between an end portion of the stator assembly 530 and the motor housing 510, and the heat dissipation fan 730 is located in the gap. This design of using the active fan 562 for heat dissipation is not affected by the forward and reverse rotation and the rotational speed of the motor 500, which can maintain stable heat dissipation capacity, which may help support that the motor 500 operates at an appropriate operating temperature.

In some embodiments, the active fan 562 is integrated with a driving apparatus and connected to a wiring board of the motor 500 via a third FPC flexible cable. The third FPC flexible cable has a certain flexibility and can be arranged arbitrarily according to spatial layout, which may simplify wiring, and make internal layout of the motor 500 more compact and the motor 500 more miniaturized. The third FPC flexible cable is located on the outside of the stator assembly 530, and a metal protective plate is provided on a side of the third FPC flexible cable facing the rotor assembly 540 or the stator assembly 530, so that the third FPC flexible cable can be bent into a required shape through the metal protective plate, which may facilitate routing. The metal protective plate can also protect the third FPC flexible cable, and also isolate magnetic field, which may reduce adverse effects of the magnetic field.

Referring to FIGS. 27-29, in some embodiments, a magnetic ring 570 is further included. The magnetic ring 570 is disposed on a rotor shaft 542 of the rotor assembly 540. The magnetic ring 570 can be connected to the rotor shaft 542 by bonding, which is convenient to use. The magnetic ring 570 and the rotor shaft 542 can also be connected by structural cooperation, such as axial positioning via a magnetic ring buckle 572 and peripheral positioning via the spline 573, instead of gluing, to reduce excessive glue filling and overflow, or insufficient glue filling and unstable connection. In some embodiments, an inner ring of the magnetic ring 570 includes the spline 573. The spline 573 can be a continuous ring of tooth structure or discontinuous, separate segments of tooth structure. A side of the magnetic ring 570 includes the magnetic ring buckle 572, and a keyway 5421 and a groove 5422 are defined on the corresponding rotor shaft 542. When the magnetic ring 570 is mounted on the rotor shaft 542, the spline 573 cooperates with the keyway 5421, and the magnetic ring buckle 572 is inserted into the groove 5422.

Further, the magnetic ring 570 includes a shell 571 and a magnetic component 574 embedded in the shell 571. When connected to the rotor shaft 542 by structural cooperation, structures such as the magnetic ring buckle 572 and the spline 573 provided on the magnetic ring 570 for connection are all disposed on the shell 571.

In some embodiments, the shell 571 is injection-molded outside the magnetic component 574. In this way, the magnetic component 574 is magnetized after injection molding and cooling, which may help reduce high temperature during injection molding from affecting magnetism of the magnetic component 574.

Referring to FIG. 29, in other embodiments, the shell 571 is provided in a split manner, and the shell 571 is assembled outside the magnetic component 574. The separately produced shell 571 includes at least two parts, which are connected into a whole via a magnetic ring buckle 572 or an interference fit. In addition, a cavity is defined inside the separately produced shell 571, and the magnetic component 574 is mounted in the cavity.

In some embodiments, the motor housing 510 further includes a motor key mounting position 512 configured to mount a second functional key 5121, and the second functional key 5121 is connected to the wiring board of the motor 500 via the third FPC flexible cable. The second functional key 5121 can be a key related to a function of the motor 500, such as a switch of the motor 500, or a control switch of the active fan 562. The second functional key 5121 can also be a key related to a function of a device where the motor 500 is located. Especially when there is no location for configuring a key on the device, the key can be configured on the motor 500, which may provide more sufficient installation space.

In some embodiments, two second functional keys 5121 may be provided to control a locking assembly of the connecting structure 200. Pressing the two second functional keys 5121 at the same time can unlock the locking assembly, so that the output device can be removed from the base 400.

In some embodiments, the first functional key 6124 and the second functional key 5121 can be arranged at the same time. Pressing the two second functional keys 5121 at the same time can unlock the locking assembly, so that the output device can be removed from the base 400. At this time, both hands are respectively located on the battery 610 and the motor 500, so that gripping the output device is more stable.

In some embodiments, an angle sensor and/or a revolution sensor can be disposed on a motor shaft, a reel shaft, or any transmission shaft, and configured to record a rotation angle and/or the number of revolutions of the corresponding transmission shaft, and further calculate how long the cable 900 of the current output device has been pulled out based on a transmission ratio between the transmission shaft and the reel shaft, and a periphery of the reel shaft.

In some embodiments, one or more of the technical solutions of the universal cable outlet assembly 120, the technical solution of the winding reel 130 to fix the cable 900, the solution of arranging the cable on the winding reel 130 via the cable-arranging assembly 140, the solution of coupling the connecting structure 200 with the base 400, the solution of the connecting busbar 520 in the motor 500, and the solution of the battery 610 can be applied not only to the output device but also to the corresponding structures of other fitness equipment.

The description with reference to terms such as "an embodiment", "some embodiments", "specifically", or "some examples" means that a specific feature, structure, material, or characteristic described in conjunction with the embodiment or example is included in at least one embodiment or example of the present disclosure. In this specification, the exemplary expressions of the above terms do not necessarily refer to the same embodiment or example. Moreover, the described specific features, structures, materials, or characteristics may be combined in any one or more embodiments or examples in a suitable manner.

Although the embodiments of the present disclosure have been shown and described, those having ordinary skill in the art can understand that various changes, modifications, substitutions, and variations may be made to the embodiments without departing from the principle and spirit of the present disclosure, and the scope of the present disclosure is defined by the claims and their equivalents.

## Claims

1. A connecting busbar (520), configured in a motor (500), **characterized in that** the motor (500) comprises a plurality of coils (550) arranged in a peripheral direction, and the connecting busbar (520) comprises:
a mounting base (521), wherein the mounting base (521) is an insulating member;
at least one first connecting member (522), inserted into the mounting base (521), wherein the first connecting member (522) comprises at least two first connecting ends (5221), and a corresponding one of the at least two first connecting ends (5221) is configured to be connected to a corresponding one of the plurality of coils (550); and
at least one second connecting member (523), disposed on the mounting base (521), and comprising at least two second connecting ends (5231), wherein a corresponding one of the at least two second connecting ends (5231) is configured to be connected to another corresponding one of the plurality of coils (550).

2. The connecting busbar (520) according to claim 1, wherein the first connecting member (522) comprises two first connecting ends (5221) disposed at intervals along the peripheral direction, the first connecting member (522) is disposed at least one of an inner side of the mounting base (521) or an outer side of the mounting base (521), and the first connecting member (522) is connected to two adjacent coils (550) of the plurality of coils (550) via the two first connecting ends (5221); and
the second connecting member (523)comprises two second connecting ends (5231) disposed at intervals along the peripheral direction, the second connecting member (523) further comprises a second connecting portion (5232) connected to the two second connecting ends (5231), the second connecting portion (5232) extends along a top surface of the mounting base (521), and the second connecting member (523) is connected to two spaced-apart coils (550) of the plurality of coils (550) via the two second connecting ends (5231).

3. The connecting busbar (520) according to claim 1, wherein the first connecting member (522) is assembled to the mounting base (521) in an inserting manner.

4. The connecting busbar (520) according to claim 2, wherein at least one insertion slot (5211) is defined on the mounting base (521), the first connecting member (522) further comprises an insertion portion (5222), and the insertion portion (5222) is configured to be inserted into the at least one insertion slot (5211); and
the two first connecting ends (5221) are exposed at an inner side or an outer side of the mounting base (521).

5. The connecting busbar (520) according to claim 2, wherein a protruding portion (5213) is disposed on at least one of the inner side or the outer side of the mounting base (521), and the at least one insertion slot (5211) is defined on the protruding portion (5213), and the at least one insertion slot (5211) is vertically defined downward from an upper end of the protruding portion (5213).

6. The connecting busbar (520) according to claim 5, wherein the insertion portion (5222) is connected to the two first connecting ends (5221), and the two first connecting ends (5221) are located on both sides of the insertion portion (5222); or
the first connecting member (522) comprises a first connecting portion (5223) and two insertion portions (5222), the two first connecting ends (5221) are connected to each other by the first connecting portion (5223), the two insertion portions (5222) are located on both sides of the two first connecting ends (5221), and a corresponding one of the two insertion portions (5222) and a corresponding one of the two first connecting ends (5221) are arranged at an angle;
the angle between the corresponding one of the two insertion portions (5222) and the corresponding one of the two first connecting ends (5221) is less than 90 degrees.

7. The connecting busbar (520) according to claim 2, wherein each of the plurality of coils (550) comprises two terminals, one of the two terminals is disposed at the inner side of the mounting base (521), and the other of the two terminals is disposed at the outer side of the mounting base (521); and
there are a plurality of first connecting members (522), and the plurality of first connecting members (522) comprises two groups of first connecting members (522), one group of the first connecting members (522) is disposed at the inner side of the mounting base (521), the other group of the first connecting members (522) is disposed at the outer side of the mounting base (521), and a corresponding one of the plurality of first connecting members (522) disposed at the inner side and a corresponding one of the plurality of first connecting members (522) disposed at the outer side are arranged in a staggered manner along the peripheral direction.

8. The connecting busbar (520) according to claim 2, wherein the second connecting member (523) is arranged inside the mounting base (521) by prefabrication or subsequent assembly, and the two second connecting ends (5231) extend out of the mounting base (521).

9. The connecting busbar (520) according to claim 8, wherein an annular groove (5212) is defined on the mounting base (521), the second connecting member (523) is mounted in the annular groove (5212), and the second connecting end (523) extends out of the annular groove (5212).

10. The connecting busbar (520) according to claim 9, wherein the connecting busbar (520) further comprises a cover plate (524), and the cover plate (524) is configured to cover the annular groove (5212);
there are a plurality of second connecting members (523), the plurality of second connecting members (523) are disposed in the annular groove (5212), the connecting busbar (520) further comprises an insulating pad (525), and two adjacent second connecting members (523) of the plurality of second connecting members (523) are isolated from each other by the insulating pad (525).

11. The connecting busbar (520) according to claim 2, wherein the second connecting member (523) and the mounting base (521) are pre-formed, the second connecting member (523) is embedded in the mounting base (521); and
the second connecting member (523) further comprises a positioning portion (5233) connected to the second connecting portion (5232), and the positioning portion (5233) extends out from the mounting base (521).

12. The connecting busbar (520) according to claim 7, wherein at least one of the following is fulfilled:
a corresponding one of the plurality of coils (550) comprises a wound flat wire, a terminal of the corresponding one of the plurality of coils (550) is sheet-shaped, and a corresponding one of the two first connecting ends (5221) and a corresponding one of the two second connecting ends (5231) are sheet-shaped, and the terminal of the corresponding one of the plurality of coils (550), the corresponding one of the two first connecting ends (5221), and the corresponding one of the two second connecting ends (5231) are stacked along a thickness direction; or
the terminal of each of the plurality of coils (550), each of the two first connecting ends (5221), and each of the two second connecting ends (5231) protrude from the top surface of the mounting base (521).

13. A motor (500), **characterized by** comprising:
a motor housing (510);
a stator assembly (530), fixedly disposed in the motor housing (510);
a rotor assembly (540), rotatably disposed in the motor housing (510);
a plurality of coils (550), arranged in a peripheral direction; and
the connecting busbar (520) according to any one of claims 1-12;
wherein the plurality of coils (550) and the connecting busbar (520) are located on the stator assembly (530) or on the rotor assembly (540).

14. The motor (500) according to claim 13, wherein the motor (500) is configured in a cable output device;
the stator assembly (530) comprises a stator core (531), a plurality of winding frames (532) are arranged inside the stator core (531) along a peripheral direction of the stator core (531), and a corresponding one of the plurality of coils (550) comprises a flat wire wound around a corresponding one of the plurality of winding frames (532); and
the corresponding one of the plurality of coils (550) comprises the flat wire stacked along a thickness direction, and a stacking direction extends toward a central axis of the stator core (531).

15. The motor (500) according to claim 13, wherein at least one of the following is satisfied:
the motor (500) further comprises a heat dissipation fan (730), and at least one of the rotor assembly (540) or the stator assembly (530) comprises an avoidance portion, and the avoidance portion is configured to mount the heat dissipation fan (730); or
the stator assembly (530) is sleeved on the rotor assembly (540), and a core of the rotor assembly (540) is annular, and the heat dissipation fan (730) is disposed inside an annular structure of the rotor assembly (540); or a gap is defined between an end portion of the stator assembly (530) and the motor housing (510), and the heat dissipation fan (730) is located in the gap.
